# EUROPÄISCHE PATENTANMELDUNG

(11) **EP 3 327 073 A1**
(43) Veröffentlichungstag der Anmeldung: **30.05.2018**
(21) Anmeldenummer: 17194864.9
(22) Anmeldetag: 05.10.2017
(51) Int. Cl.: C08K 3/04

(54) **POLYMERER ARTIKEL UMFASSEND WENIGSTENS EINE KAUTSCHUKMISCHUNG**

(30) Priorität: 29.11.2016 DE 102016223593
(71) Anmelder: Continental Reifen Deutschland GmbH, 30165 Hannover (DE)
(72) Erfinder: Müller, Matthias-Stephan, 30827 Garbsen (DE); Efimov, Konstantin, 30453 Hannover (DE); Naik, Shreyas, 30173 Hannover (DE); Minx, Carsten, 31535 Neustadt (DE); Hallmann, Steffen, 30171 Hannover (DE); Heinrich, Nikolas, 30823 Garbsen (DE)
(74) Vertreter: Finger, Karsten

(57) **Zusammenfassung**

Die Erfindung betrifft einen polymeren Artikel umfassend wenigstens eine Kautschukmischung.

Die Kautschukmischung des erfindungsgemäßen polymeren Artikels enthält 1 bis 200 phr wenigstens eines Pyrolyse-Rußes

## Beschreibung

### Polymerer Artikel umfassend wenigstens eine Kautschukmischung

Die Erfindung betrifft einen polymeren Artikel umfassend wenigstens eine Kautschukmischung.

Artikel aus polymeren Werkstoffen, die wenigstens eine Kautschukmischung umfassen, finden vielfältige Anwendung.
Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und/oder synthetischem Polyisopren (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.
Auch in Schläuchen, Schlauchbändern, Felgenbändern, Fördergurten, Kondensatoren, Antriebsriemen, Antriebsketten, Handgriffen, Matten, Bodenbelägen, Dichtungen, oder Dämpfungseinheiten jeglicher Art kommen Kautschukmischungen zum Einsatz.

Allerdings enthalten die Kautschukmischungen polymerer Artikel meist Industrieruß als verstärkenden Füllstoff oder zumindest als Pigment.

Industrieruße weisen jedoch einen hohen Anteil an polyzyklischen aromatischen Kohlenwasserstoffen (PAK) auf. Polyzyklische aromatische Kohlenwasserstoffe sind gesundheitsschädlich. In der GS-Spezifikation - Spezifikation gemäß § 21 Abs. 1 Nr. 3 ProdSG - sind bspw. einzuhaltende PAK-Höchstgehalte für Materialien von relevanten Kontakt-/Griff- und Betätigungsflächen kategorisiert.

Der vorliegenden Erfindung liegt die Aufgabe zugrunde, einen polymeren Artikel umfassend wenigstens eine Kautschukmischung bereitzustellen, die im Vergleich zum Stand der Technik weniger gesundheitsschädlich und umweltfreundlicher ist bzw. die möglichst wenig bis gar keine PAK-haltigen Substanzen aufweist.

Gelöst wird die Aufgabe erfindungsgemäß dadurch, dass der polymere Artikel wenigstens eine Kautschukmischung aufweist, die 1 bis 200 phr wenigstens eines Pyrolyse-Rußes enthält.

Überraschenderweise kann in polymeren Artikeln Pyrolyse-Ruß statt "herkömmlichen" Industrierußen eingesetzt werden, ohne dass sich die physikalischen Eigenschaften, insbesondere der Wärmeaufbau und die Reißeigenschaften verschlechtern.

Unter einem polymeren Artikel wird im Rahmen der vorliegenden Erfindung insbesondere ein schlauchförmiger Körper, ein Schlauchband, ein Felgenband, ein Fördergurt, ein Metall-Gummi-Element, ein Antriebsriemen, eine Antriebskette, ein Handgriff, eine Matte, ein Bodenbelag, eine Dichtung oder ein Dämpfungselement verstanden.
Bevorzugt handelt es sich bei dem erfindungsgemäßen polymeren Artikel um einen Schlauchförmigen Körper oder ein Schlauchband oder ein Felgenband oder einen Fördergurt oder ein Metall-Gummi-Element oder einen Antriebsriemen oder eine Antriebskette oder einen Handgriff oder eine Matte oder einen Bodenbelag oder eine Dichtung oder ein Dämpfungselement.

Ein weiterer Gegenstand der vorliegenden Erfindung ist damit die Verwendung einer Kautschukmischung, die 1 bis 200 phr wenigstens eines Pyrolyse-Rußes enthält, in einem polymeren Artikel, der ausgewählt ist aus der Gruppe bestehend aus einem schlauchförmigen Körper und einem Schlauchband und einem Förderband und einem Fördergurt und einem Metall-Gummi-Element und einem Antriebsriemen und einer Antriebskette und einem Handgriff und einer Matte und einem Bodenbelag und einer Dichtung und einem Dämpfungselement.

Im Folgenden werden die erfindungsgemäßen polymeren Artikel in ihrem allgemeinen Aufbau und Anwendungsprofil genannt und ggf. erläutert, wobei die genannten Ausführungen auch jeweils Alternativen darstellen.
- Schlauchförmige Körper
   Schlauchförmige Körper umfassen die Produktgruppe Förderschläuche aller Art, Luftfederbälge (Kreuzlagenbälge, Axialbälge) und Kompensatoren in verschieden Ausführungen (z.B. Torsionskompensator, Lateralkompensator). Das Aufbaukonzept ist dabei überall gleich, nämlich umfassend eine Außenschicht (Mantel), eine Innenschicht (Seele) sowie insbesondere einen eingebetteten ein- oder mehrlagigen Festigkeitsträger. Zusätzlich kann noch wenigstens eine Zwischenschicht, beispielsweise zwischen zwei Festigkeitsträgerlagen, vorhanden sein.
- Felgenband
   Felgenbänder werden auch als Schlauchbänder bezeichnet und dienen insbesondere im Zweiradreifen dazu, den Schlauch zu schützen.
- Fördergurt
   Fördergurte umfassen jegliche dem Fachmann bekannte Fördergurte zur Beförderung verschiedenster Güter.
- Metall-Gummi-Element
   Metall-Gummi-Elemente (oder auch Gummi-Metall-Elemente) umfassen jegliche dem Fachmann bekannten Elemente aus Metall und Gummi, wie insbesondere für Fahrzeuge, wie z. B. in der Schwingungstechnik in Fahrzeugen.
- Antriebsriemen
   Antriebsriemen, die zumeist mit einem eingebetteten Festigkeitsträger mit in Längsrichtung verlaufenden parallel angeordneten Zugträgern (Zugstränge) versehen sind, kommen in verschiedenen Ausführungsformen vor, und zwar als Flachriemen, Keilriemen, Keilrippenriemen, Zahnriemen und Verbundseile, die jeweils einen Unterbau mit einer Kraftübertragungszone und eine Decklage als Riemenrücken aufweisen. Der wesentliche Unterschied liegt dabei in der Konstruktion der Kraftübertragungszone, bedingt durch unterschiedliche Oberflächengeometrien, beispielsweise durch eine zahnförmige Profilierung bei Zahnriemen.
- Antriebskette: was ist das?
   Antriebsketten kommen z.B. in einem Pistenbully oder in einem Traktor anstelle von Reifen zum Einsatz.
- Handgriffe
   Handgriffe, wie z. B. und insbesondere an Kinderwagen, an Werkzeugen, an Golfschlägern oder anderen Sportgeräten.
- Matte
   Beispielsweise und insbesondere Fußbodenmatten mit wenigstens einer Kautschukmischung und recycelten Gummipartikeln.
- Bodenbelag
   Insbesondere Bodenbeläge, wie sie z. B. in Kunstrasen für Fußballfelder verwendet werden.
- Dichtung
   Bei der Dichtung kann es sich insbesondere und z. B. um O-Ringe oder Dichtungsbahnen z. B. für Fenster und Türen handeln.
- Dämpfungselement
   insbesondere eines Lagers, einer Buchse oder einer Schichtfeder, Konusfeder Das Dämpfungselement umfasst einen polymeren Werkstoff mit elastischen Eigenschaften und kommt zumeist im Rahmen eines Metall-Polymer-Verbundes zum Einsatz, und zwar in Form eines Lagers mit einem Lageroberteil und Lagerunterteil, einer Buchse mit Kern und Hülse oder einem Metall-Gummi-Federelement, wie z.B. einer Schicht-, oder Konusfeder.Vorzugsweise werden hier alle freien Oberflächen des Dämpfungselementes mit dem Überzug versehen.
   Bei dem Dämpfungselement kann es sich aber auch um einen Dämpfer für eine Tür bzw. Türkante oder dergleichen handeln.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.
Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d. h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.
Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.

Ein wesentlicher Vorteil der vorliegenden Erfindung ist somit, dass Pyrolyse-Ruß eine gesundheits- und umweltfreundliche Alternative zu Industrierußen ist.

Der Pyrolyse-Ruß ist bevorzugt mittels Pyrolyse aus Altreifen und/oder vulkanisierten Produktionsabfällen aus der Reifenherstellung und/oder vulkanisierten Schläuchen hergestellt.
Besonders bevorzugt wurde der Pyrolyseruß aus Altreifen und/oder Schläuchen hergestellt, ganz besonders bevorzugt aus Altreifen.

Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.
Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon © 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Der erfindungsgemäß enthaltene Pyrolyse-Ruß weist bevorzugt einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.
Der Aschegehalt bezieht sich nur auf den Pyrolyse-Ruß und wird mittels thermogravimetrischer Analyse (TGA) gemäß ASTM D1506 des Pyrolyse-Rußes bestimmt.
Mit einem derartigen Aschegehalt wird insbesondere die Aufgabe gelöst, dass die Eigenschaften wie insbesondere der Wärmeaufbau und die Reißeigenschaften des erfindungsgemäßen polymeren Artikels nicht verschlechtert werden und gleichzeitig eine umwelt- und gesundheitsfreundliche Alternative bereitgestellt wird.

Der erfindungsgemäß enthaltene Pyrolyse-Ruß weist ferner bevorzugt einen SchwefelGehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.
Mit einem derartigen Schwefelgehalt wird insbesondere die Aufgabe gelöst, dass die Eigenschaften wie insbesondere der Wärmeaufbau und die Reißeigenschaften des erfindungsgemäßen polymeren Artikels nicht verschlechtert werden und gleichzeitig eine umwelt- und gesundheitsfreundliche Alternative bereitgestellt wird.

Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf.
Mit derartigen Bereichen für die Jodadsorptionszahl und die DBP-Zahl wird insbesondere die Aufgabe gelöst, dass die Eigenschaften wie insbesondere der Wärmeaufbau und die Reißeigenschaften des erfindungsgemäßen polymeren Artikels nicht verschlechtert werden und gleichzeitig eine umwelt- und gesundheitsfreundliche Alternative bereitgestellt wird.

Bei dem erfindungsgemäßen polymeren kann es sich prinzipiell um jeden polymeren Artikel handeln, der wenigstens eine Kautschukmischung enthaltend Füllstoffe aufweist, insbesondere die oben genannten polymeren Artikel. Die bisherigen Füllstoffe werden dann erfindungsgemäß vollständig oder zumindest teilweise durch Pyrolyse-Ruß ersetzt.

Bevorzugt beträgt die Menge an Pyrolyse-Ruß in der wenigstens einen Kautschukmischung des polymeren Artikels 1 bis 80 phr. In diesem Mengenbereich ist eine geringe Menge (unterer Bereich ab 1 phr) im Wesentlichen zum Schwarzfärben als Pigment sowie eine höhere Menge (bis 80 phr) im Wesentlichen als verstärkender Füllstoff umfasst.
Je nach Anwendung weisen die Kautschukmischungen unterschiedliche Mengen an Industrierußen und/oder Kieselsäure auf, die insbesondere durch den Pyrolyse-Ruß ersetzt werden.

In Kautschukmischungen, deren Hauptfüllstoff angebundene Kieselsäure ist, ist üblicherweise eine geringe Menge an Industrieruß als Pigment enthalten. Beide Füllstoffe können durch Pyrolyse-Ruß ersetzt werden:
a) Die geringe Menge, z. B. und bevorzugt 1 bis 5 phr, Industrieruß mit dem Vorteil, dass der PAK-Gehalt der Mischung mit Pyrolyse-Ruß statt Industrieruß auf ein umwelt- und gesundheitsfreundliches Niveau abfällt und weiterhin eine Schwarzfärbung gegeben ist;
b) Die Kieselsäure als Hauptfüllstoff mit dem Vorteil, dass auf die erhöhten Kosten und Prozessschwierigkeiten durch die Kieselsäure und notwendige Silan-Kupplungsagenzien verzichtet werden kann bei gleichzeitig guten Dämpfungseigenschaften.

In Kautschukmischungen, deren Hauptfüllstoff Industrieruß als Hauptfüllstoff ist, kann dieser vollständig oder zumindest teilweise durch Pyrolyse-Ruß ausgetauscht werden mit dem Vorteil, dass das Produkt PAK-frei oder mit möglich geringem PAK-Gehalt bzw. mit der oben genannten Norm konform bereitgestellt werden kann bei gleichzeitig guten physikalischen Eigenschaften.

Gemäß einer bevorzugten Ausführungsform der Erfindung weist der polymere Artikel daher wenigstens eine Kautschukmischung auf, die 1 bis 80 phr wenigstens eines Pyrolyse-Rußes und 0 bis maximal 3 phr, insbesondere bevorzugt maximal 0,1 phr, Industrieruße und 0 bis 80 phr Kieselsäure enthält.
In einer bevorzugten Ausführungsform enthält die Kautschukmischung 1 bis 10 phr wenigstens eines Pyrolyse-Rußes und 70 bis 80 phr Kieselsäure und 0 bis 0,1 phr Industrieruße, bevorzugt 0 phr Industrieruße.
In einer weiteren bevorzugten Ausführungsform der Erfindung enthält die Kautschukmischung 40 bis 80 phr wenigstens eines Pyrolyse-Rußes und 0 bis 10 phr Kieselsäure, bevorzugt 0 phr Kieselsäure, und 0 bis 0,1 phr Industrieruße, bevorzugt 0 phr Industrieruße.
Geringe Mengen bis zu 0,1 phr Industrieruße können über Verunreinigungen an der Mischerwand bei der Herstellung in die Kautschukmischung gelangen. Idealerweise enthält die Mischung jedoch 0 phr Industrieruße und ist somit frei von Industrierußen und damit von Substanzen, die einen zu hohen Anteil an PAK aufweisen.

Im Folgenden werden die Bestandteile der wenigstens einen Kautschukmischung des polymeren Artikels näher erläutert.

Der wenigstens eine Pyrolyse-Ruß wurde oben bereits ausgeführt, wobei auch ein Gemisch unterschiedlicher Pyrolyse-Ruße denkbar ist. Die angegebenen Mengen beziehen sich immer auf die Gesamtmenge an enthaltenen Pyrolyse-Rußen.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 120 bis 235 m²/g, und eine CTAB-Oberfläche (gemäß ASTM D 3765) von 30 bis 400 m²/g, bevorzugt von 50 bis 330 m²/g, besonders bevorzugt von 100 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z. B. Zeosil® 1165 MP der Firma Solvay), zum Einsatz kommen.

Als Industrieruß, sofern noch in der oder den Mischungen vorhanden, kommen alle der fachkundigen Person bekannte Rußtypen in Frage.
In einer Ausführungsform hat der Ruß eine Jodzahl, gemäß ASTM D 1510, die auch als Jodadsorptionszahl bezeichnet wird, zwischen 30 g/kg und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 80 bis 200 ml/100g.
Die DBP-Zahl gemäß ASTM D 2414 bestimmt das spezifische Absorptionsvolumen eines Rußes oder eines hellen Füllstoffes mittels Dibutylphthalat.

Als weitere Füllstoffe können alle in der Kautschukindustrie denkbaren Füllstoffe vorhanden sein, wie beispielsweise Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Die weiteren Bestandteile der Kautschukmischungen umfassen wenigstens einen Kautschuk, gemäß einer bevorzugten Ausführung wenigstens einen Dienkautschuk. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).
Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.
Welcher Kautschuktyp bevorzugt wird, hängt von der Artikelart ab. Besonders Vielfältig ist der Einsatz von verschiedenen Kautschuktypen bei schlauchförmigen Körpern, wobei hier insbesondere folgende Kautschukkomponenten zu nennen sind: NR, IR, ACM, AEM, BIMS, CM, CR, IIR, BIIR, CIIR, ECO, EPM, EPDM, ETER, EVA, FKM, HNBR, VMQ oder FVMQ. Bei Antriebsriemen kommen insbesondere Kautschukmischungen auf der Basis von EPM und/oder EPDM (bei Keil- und Keilrippenriemen) sowie NBR, speziell jedoch HNBR (bei Zahnriemen) zur Anwendung.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bevorzugt ist der wenigstens eine Dienkautschuk ausgewählt aus der Gruppe bestehend aus Naturkautschuk (NR), synthetischem Polyisopren (IR), Butadien-Kautschuk (BR), Styrol-Butadien-Kautschuk (SBR) und Nitril-Butadien-Kautschuk (NBR).

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Falls in der Kautschukmischung wenigstens ein Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Bevorzugt handelt es sich um wenigstens einen ESBR.
Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.
Der Styrol-Butadien-Kautschuk (Styrol-Butadien-Copolymer) aus der Gruppe der weiteren Dienkautschuke ist im Rahmen der vorliegenden Anmeldung ein im Stand der Technik bekannter Styrol-Butadien-Kautschuk.

Besonderes bevorzugt handelt es sich bei dem Dienkautschuk um NR, IR, BR, ESBR und/oder NBR. NBR wird insbesondere verwendet, um eine ausreichende elektrische Leitfähigkeit zu erzielen.

Die Kautschukmischung kann auch ein Gemisch aus wenigstens einem Elastomer mit wenigstens einem TP (Thermoplast) umfassen, und damit ein thermoplastisches Elastomer (TPE) darstellen. Die bevorzugten Thermoplastkomponenten sind: Polyolefin, insbesondere Polyethylen (PE) oder Polypropylen (PP), Polystyrol (PS), Polyamid (PA), beispielsweise PA6 oder PA6.6, Polyester, beispielsweise PET, PEN oder PBT.
Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.

Die Kautschukmischung kann je nach Art der enthaltenen Polymere über verschiedene Vernetzungsmechanismen vernetzt werden. Denkbar sind insbesondere Vernetzung über Schwefel oder Peroxid oder eine Harzvernetzung, Strahlenvernetzung oder bisphenolische Vernetzung.

Die üblichen sonstigen Mischungsingredienzien umfassen Aktivatoren (wie Zinkoxid und Stearinsäure bei der Schwefelvernetzung), Verarbeitungshilfsmittel, Weichmacher, Alterungsschutzmittel. Diesbezüglich wird auf den allgemeinen Stand der Kautschukmischungstechnologie verwiesen.

Die Herstellung der Kautschukmischung des erfindungsgemäßen polymeren Artikels, die Pyrolyse-Ruß enthält, und die Herstellung des erfindungsgemäßen polymeren Artikels erfolgen auf dem Fachmann bekannte Art und Weise, wobei insbesondere der Pyrolyse-Ruß wie Industrieruß eingearbeitet wird.
Als geeigneter Pyrolyse-Ruß kann beispielsweise der unter dem Handelsnamen CB e 603 bekannte und erhältliche Pyrolyse-Ruß von der Fa. Pyrolyx AG verwendet werden.

## Patentansprüche

1. Polymerer Artikel umfassend wenigstens eine Kautschukmischung, **dadurch gekennzeichnet, dass** die Kautschukmischung 1 bis 200 phr wenigstens eines Pyrolyse-Rußes enthält.

2. Artikel nach Anspruch 1, **dadurch gekennzeichnet, dass** es sich um einen Schlauchförmigen Körper oder ein Schlauchband oder ein Felgenband oder einen Fördergurt oder ein Metall-Gummi-Element oder einen Antriebsriemen oder eine Antriebskette oder einen Handgriff oder eine Matte oder einen Bodenbelag oder eine Dichtung oder ein Dämpfungselement handelt.

3. Artikel nach Anspruch 1 oder 2, **dadurch gekennzeichnet, dass** der Pyrolyse-Ruß einen Aschegehalt von 5 bis 30 Gew.-% aufweist.

4. Artikel nach einem der vorherigen Ansprüche, **dadurch gekennzeichnet, dass** der Pyrolyse-Ruß einen Schwefelgehalt von größer als 1 Gew.-% aufweist.

5. Artikel nach einem der vorherigen Ansprüche, **dadurch gekennzeichnet, dass** der Pyrolyse-Ruß eine Jodadsorptionszahl gemäß ASTM D 1510 von 100 bis 130 g/kg und eine DBP-Zahl gemäß ASTM D 2414 von 50 bis 100 ml/100g aufweist.

6. Artikel nach einem der vorherigen Ansprüche, **dadurch gekennzeichnet, dass** die Kautschukmischung 1 bis 80 phr wenigstens eines Pyrolyse-Rußes und 0 bis maximal 3 phr, insbesondere bevorzugt maximal 0,1 phr, Industrieruße und 0 bis 80 phr Kieselsäure enthält.

7. Verwendung einer Kautschukmischung, die 1 bis 200 phr wenigstens eines Pyrolyse-Rußes enthält, in einem polymeren Artikel der ausgewählt ist aus der Gruppe bestehend aus einem schlauchförmigen Körper und einem Schlauchband und einem Förderband und einem Fördergurt und einem Metall-Gummi-Element und einem Antriebsriemen und einer Antriebskette und einem Handgriff und einer Matte und einem Bodenbelag und einer Dichtung und einem Dämpfungselement.
